(19) Europäisches Patentamt
European Patent Office
Office européen des brevets

(11) **EP 1 851 847 B1**

(12) **EUROPÄISCHE PATENTSCHRIFT**

(45) Veröffentlichungstag und Bekanntmachung des Hinweises auf die Patenterteilung:
**04.03.2009 Patentblatt 2009/10**

(21) Anmeldenummer: **06704548.4**

(22) Anmeldetag: **20.01.2006**

(51) Int Cl.:
*H02P 6/22* (2006.01)     *G05B 9/02* (2006.01)
*H02P 6/24* (2006.01)

(86) Internationale Anmeldenummer:
**PCT/EP2006/000483**

(87) Internationale Veröffentlichungsnummer:
**WO 2006/089605 (31.08.2006 Gazette 2006/35)**

(54) **VERFAHREN ZUM BETRIEB EINES ZWEISTRÄNGIGEN ELEKTRONISCH KOMMUTIERTEN MOTORS, UND MOTOR ZUR DURCHFÜHRUNG EINES SOLCHEN VERFAHRENS**

METHOD FOR OPERATION OF A TWO-PHASE ELECTRONICALLY-COMMUTATED MOTOR AND MOTOR FOR CARRYING OUT SAID METHOD

PROCEDE POUR FAIRE FONCTIONNER UN MOTEUR A DEUX BRANCHES A COMMUTATION ELECTRONIQUE ET MOTEUR POUR L'EXECUTION D'UN TEL PROCEDE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **24.02.2005 DE 202005003414 U**

(43) Veröffentlichungstag der Anmeldung:
**07.11.2007 Patentblatt 2007/45**

(73) Patentinhaber: **ebm-papst St. Georgen GmbH & Co. KG**
**78112 St. Georgen (DE)**

(72) Erfinder:
• **FÖLL, Claus**
  **79276 Reute (DE)**
• **JESKE, Frank**
  **78112 St. Georgen (DE)**
• **KUNER, Arnold**
  **78112 St. Georgen (DE)**
• **LÖFFLER, Jens**
  **78050 Villingen- Schwenningen (DE)**

(74) Vertreter: **Raible, Tobias**
**Raible & Raible**
**Schoderstrasse 10**
**70192 Stuttgart (DE)**

(56) Entgegenhaltungen:
**US-A- 5 731 674       US-A1- 2002 039 014**
**US-B1- 6 188 187       US-B1- 6 288 507**

**Beschreibung**

Die Erfindung betrifft ein Verfahren zum Betrieb eines zweisträngigen elektronisch kommutierten Motors, und einen Motor zur Durchführung eines solchen Verfahrens. Die Erfindung bezieht sich bevorzugt auf Motoren mit kleiner und mittlerer Leistung, wie sie zum Antrieb von Lüftern verwendet werden, die man etwa durch den Begriff "Kompaktlüfter" oder "Gerätelüfter" charakterisieren könnte, z.B. in einem Leistungsbereich von etwa 0,5 W bis etwa 30 W, bevorzugt etwa 3 W bis etwa 20 W.

Bei solchen Lüftern besteht der Wunsch, dass sie nur dann mit voller Leistung laufen, also mit einer Drehzahl von z.B. 4000 U/min, wenn die Temperatur des zu kühlenden Objekts hoch ist. Man kann hierzu durch einen Sensor an oder in diesem Objekt ein Temperatursignal und mit diesem ein PWM-Signal erzeugen, dessen Tastverhältnis von der Temperatur dieses Objekts abhängt, so dass z.B. bei einer Temperatur von 20° C das Tastverhältnis niedrig ist und der Lüfter folglich langsam läuft, da nur wenig Wärme entfernt werden muss. Hat dagegen das Objekt eine Temperatur von 70° C, so wird das Tastverhältnis z.B. auf 80 % erhöht, und der Lüfter läuft entsprechend schneller, um die größere Wärmemenge sicher abführen zu können.

Auf diese Weise ergibt sich eine höhere Lebensdauer solcher Lüfter, und bei niedrigen Temperaturen hört man einen solchen Lüfter kaum oder gar nicht, da er langsam läuft.

Bei Lüftern dieser Art, die sehr preiswert sein müssen, stellt sich das Problem, die Temperaturinformation, welche in einem PWM-Signal der beschriebenen Art enthalten ist, möglichst vollständig und nach Art einer konformen Abbildung auf die Drehzahl des Motors bzw. Lüfters abzubilden, oder anders gesagt, von dieser Temperaturinformation sollte möglichst nichts verloren gehen.

Z.B. könnte es sein, dass einem Tastverhältnis von 15 % eine Drehzahl von 15 % der Höchstdrehzahl des Lüfters entsprechen sollte, einem Tastverhältnis von 20 % eine Drehzahl von 20 % der Höchstdrehzahl, etc.

Wenn nun aufgrund von Eigenheiten der Schaltung und der Konstruktion des Motors dieser so arbeitet, dass die Drehzahl in einem Bereich des Tastverhältnisses von 15 - 50 % konstant einen Wert von 15 % der Höchstdrehzahl hat, und erst ab einem Tastverhältnis von 50 % ansteigt, so geht im Bereich 15 % bis 50 % des Tastverhältnisses die Temperaturinformation verloren. Dies ist unerwünscht, weil keine konforme Abbildung stattfindet und weil die Gefahr einer Überhitzung des zu kühlenden Objekts besteht.

Es ist deshalb eine Aufgabe der Erfindung, ein neues Verfahren zum Betrieb eines zweisträngigen elektronisch kommutierten Motors, und einen Motor zur Durchführung eines solchen Verfahrens, bereit zu stellen.

Nach der Erfindung wird diese Aufgabe gelöst durch ein Verfahren gemäß Patentanspruch 1. Wenn der dritte Halbleiterschalter gesperrt wird, wird die Energiezufuhr von der Gleichstromquelle zum einen Wicklungsstrang unterbrochen, der im Augenblick eingeschaltet ist. Da jedoch der Strom in diesem einen Wicklungsstrang das Bestreben hat, unverändert weiter zu fließen, fließt er sowohl im einen wie im anderen Wicklungsstrang weiter. Jedoch fließt dieser Strom durch den anderen Wicklungsstrang in einer zur "normalen" Richtung entgegengesetzten Richtung, so dass der Strom auch im anderen Wicklungsstrang antreibend wirkt.

Da der Strom, der in diesem von der Gleichstromquelle getrennten Zustand durch beide Wicklungsstränge fließt, hierbei nach Art einer Sprungfunktion von einem größeren auf einen kleineren Wert springt, wird die im magnetischen Kreis des Motors gespeicherte Energie weiterhin zum Antrieb des Rotors verwendet, und es wird wenig oder keine Blindleistung erzeugt.

Wenn anschließend der dritte Halbleiterschalter wieder eingeschaltet wird, wird erneut Energie aus der Gleichstromquelle zugeführt. Der Strom im anderen Wicklungsstrang springt sofort wieder auf Null, und der Strom im einen Wicklungsstrang springt wieder auf seinen vollen Wert, da auch hier eine Sprungfunktion wirksam wird, weil sich im Augenblick des Sprungs am Energieinhalt des magnetischen Kreises des Motors nichts ändert. Als Folge dieses Sprungs wird dann die Antriebsenergie wieder voll durch den Strom erzeugt, welcher durch den einen Wicklungsstrang fließt, während der Beitrag des anderen Wicklungsstranges wieder zu Null wird. Im Dokument US 6 188 187 wird ebenfalls ein dritter Halbleiterschalter im Zwischenkreis verwendet, jedoch zum Betrieb des Motors in einem weiten Netspannungsbereich.

Eine andere Lösung der gestellten Aufgabe ergibt sich durch den Motor gemäß Anspruch 11. Wenn zur Steuerung des dritten Halbleiterschalters ein PWM-Signal mit variablem Tastverhältnis verwendet wird, kann der Motor dieses Tastverhältnis in einer solchen Weise in eine Drehzahl umsetzen, dass die Information, welche im Tastverhältnis enthalten ist, adäquat in eine entsprechende Drehzahl umgesetzt wird, oder anders gesagt, dass von der im Tastverhältnis enthaltenen Information wenig oder nichts verloren geht. Dies ist von besonderer Wichtigkeit dann, wenn der Motor einen Lüfter antreibt und die Drehzahl des Lüfters von einer Temperatur gesteuert wird, da hierbei die Motordrehzahl etwa monoton zunehmen sollte, wenn die überwachte Temperatur monoton ansteigt.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den Unteransprüchen.

Es zeigt:

Fig. 1          ein Schaltbild einer bevorzugten Ausführungsform eines zweisträngigen elektronisch kommutierten Motors, dessen Drehzahl durch ein PWM-Signal steuerbar ist,

Fig. 2 und 3    zwei Schaltbilder zum Erläutern der Erfindung,

Fig. 4          eine schematische Darstellung zur Erläuterung der Wirkungsweise, und

Fig. 5          Oszillogramme zur Erläuterung der Erfindung.

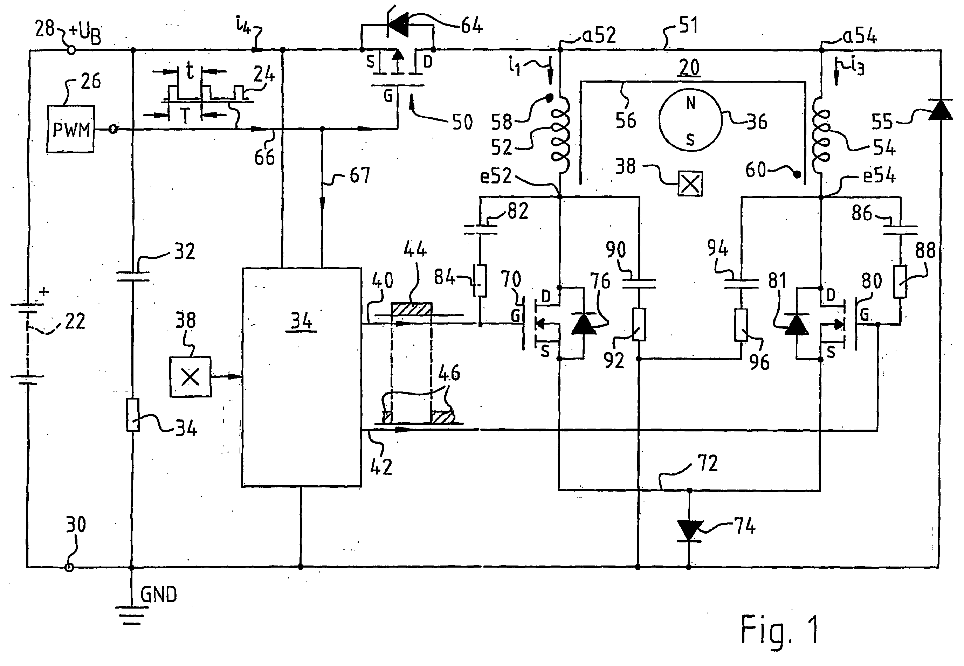

**Fig. 1** zeigt eine bevorzugte Ausführungsform eines elektronisch kommutierten Motors 20 nach der Erfindung. Dieser erhält seine Energie aus einer beliebigen Gleichstromquelle 22, welche symbolisch als Batterie dargestellt ist, aber meistens als Netzteil ausgebildet ist, das aus einem Wechsel- oder Drehstromnetz gespeist wird, wie das dem Fachmann bekannt ist.

Die Drehzahl des Motors 20 wird gesteuert mittels eines PWM-Signals 24, das von einem beliebigen PWM-Generator 26 erzeugt wird und das z.B. eine Frequenz im Bereich von 16 bis 30 kHz hat, bevorzugt etwa 25 kHz. Die Periodendauer des Signals 24 ist in Fig. 1 mit T bezeichnet und seine Impulsdauer mit t. Als Tastverhältnis (duty factor oder PWM duty cycle) bezeichnet man das Verhältnis

$$pwm = t/T * 100 \%  \qquad\qquad ...(1)$$

Wenn also t = T ist, so ist das Tastverhältnis pwm = 100 %.

In diesem Tastverhältnis kann eine beliebige Information versteckt sein, z.B. eine Information über Temperatur, Luftfeuchtigkeit, Radioaktivität etc. Gewöhnlich wird gewünscht, dass die Drehzahl mit steigendem Tastverhältnis ansteigt, doch ist es auch möglich, dass die Drehzahl mit steigendem Tastverhältnis sinken soll, oder dass sie mit steigendem Tastverhältnis bereichsweise konstant bleibt.

Ferner wird oft gewünscht, dass die im Tastverhältnis enthaltene Information nach bestimmten Regeln in eine Drehzahl des Motors 20 umgesetzt wird, z.B. mit einer sogenannten Einschalt-Hysterese.

Der Motor 20 hat einen positiven Anschluss 28 (+UB) und einen negativen Anschluss 30 (GND). Zwischen diesen Anschlüssen liegt die Serienschaltung eines RC -Glieds mit einem Kondensator 32 (z.B. 470 nF) und einem Widerstand 34 (z.B. 10 Ohm). Ferner liegt zwischen den Anschlüssen 28 und 30 eine Kommutierungssteuerung 34, z.B. ein Kommutierungsbaustein bekannter Bauart, oder ein entsprechend programmierter Mikrocontroller.

Der Motor 20 hat einen permanentmagnetischen Rotor 36, der symbolisch als zweipoliger Rotor dargestellt ist, aber naturgemäß auch mehr als zwei Pole haben kann, z.B. 4, 6,... Pole. Der Rotor 36 steuert einen Hall-IC 38, der in Fig. 1 doppelt und nur in symbolischer Form dargestellt ist, d.h. die Stromversorgung des Hall-IC 38 ist, da bekannt, nicht dargestellt. Gesteuert vom Signal des Hall-IC 38 liefert der Baustein 34 an zwei Ausgängen 40, 42 Kommutierungssignale 44, 46, die zur Steuerung des Motors 20 dienen, vgl. Fig. 1.

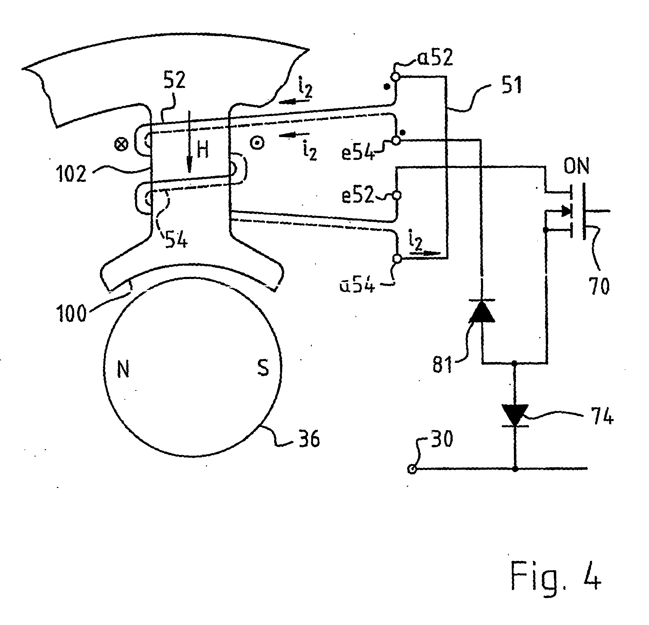

Mit dem Anschluss 28 ist auch die Source S eines p-Kanal-MOSFET 50 verbunden, dessen Drain D über eine Verbindung 51 mit den oberen Anschlüssen a52, a54 von zwei Wicklungssträngen 52, 54 verbunden ist. Diese Stränge 52, 54 haben bevorzugt eine enge magnetische Kopplung, die bei 56 angedeutet ist. Diese wird zum einen bewirkt durch den magnetischen Kreis des Motors 20, und zum anderen dadurch, dass die Wicklungsdrähte beider Stränge 52, 54 paralleldrähtig gewickelt sind, was man in der Praxis als bifilare Wicklung bezeichnet. Wie durch die Punkte 58, 60 angedeutet, erzeugen die Stränge 52, 54 unterschiedliche Magnetfelder, d.h. wenn z.B. im Strang 52 ein Strom $i_1$ vom oberen Anschluss a52 zum Anschluss e52 fließt, wird der Nordpol des Rotors 36 angezogen, und wenn im Strang 54 ein Strom $i_3$ zum oberen Anschluss a54 nach e54 fließt, wird vom gleichen Statorpol der Südpol S des Rotors 36 angezogen. Fließt dagegen ein Strom $i_3$ (Fig. 1) im Strang 54 von e54 nach a54, dann hat er die gleiche Wirkung wie ein Strom $i_1$, der im Strang 52 von a52 nach e52 fließt, bzw. er verstärkt dessen Wirkung. Dies wird bei Fig. 4 näher erläutert.

Zwischen der negativen Leitung 30 und dem positiven Zweig 51 des Gleichstrom-Zwischenkreises ist eine Diode 55 vorgesehen. Ihr Zweck wird nachfolgend erläutert.

Antiparallel zum p-Kanal-MOSFET 50 ist eine Z-Diode 64 geschaltet. Dem Gate G dieses MOSFET 50 werden über eine Steuerleitung 66 die PWM-Impulse 24 zugeführt. (Die positiven Impulse sperren den MOSFET 50.)

Der Strom durch den Strang 52 wird gesteuert von einem n-Kanal-MOSFET 70, dessen Drain D mit dem Anschluss e52 des Strangs 52 verbunden ist, dessen Source S an eine Verbindung 72 angeschlossen ist, und dessen Gate G die Impulse 44 vom Ausgang 40 des Bausteins 34 zugeführt werden.

Die Verbindung 72 ist über ein Sperrglied in Form einer Diode 74 mit dem Anschluss 30 verbunden. Sie verhindert, dass dann, wenn die Verbindung 72 negativer wird als der Anschluss 30, ein Strom vom Anschluss 30 zur Verbindung 72 fließt.

Antiparallel zum MOSFET 70 ist eine Freilaufdiode 76 angeordnet. Gewöhnlich ist eine solche Diode bereits in den MOSFET 70 integriert.

Der Strom durch den Strang 54 wird gesteuert von einem n-Kanal-MOSFET 80, zu dem eine Freilaufdiode 81 antiparallel geschaltet ist. Der Drain D des MOSFET 80 ist mit dem Anschluss e54 des Stranges 54 verbunden, und seine Source S ist an die Verbindung 72 angeschlossen. Seinem Gate G werden vom Anschluss 42 des Bausteins 34 die Steuerimpulse 46 zugeführt.

Zwischen Gate und Drain des MOSFET 70 liegt die Serienschaltung eines Kondensators 82 (z.B. 220 pF bis 3,3 nF) und eines Widerstandes 84 (z.B. 510 Ohm bis 10 kOhm). Die Funktion dieses RC-Glieds ist die Verlangsamung der Schaltvorgänge im MOSFET 70.

Analog ist beim MOSFET 80 dasselbe RC-Glied, nämlich die Serienschaltung eines Kondensators 86 und eines Widerstandes 88, vorgesehen.

Ferner liegt zwischen dem Anschluss e52 und dem Anschluss 30 die Serienschaltung eines Kondensators 90 und eines Widerstandes 92, z.B. 10 kOhm, und analog zwischen dem Anschluss e54 und dem Anschluss 30 die Serienschaltung eines Kondensators 94 und eines Widerstandes 96. Ihre Funktion ist die, Oszillationen der Drainspannungen der MOSFETs 70 und 80 zu unterdrücken, welche sonst beim Aus- und Einschalten des MOSFET 50 entstehen könnten.

**Arbeitsweise**

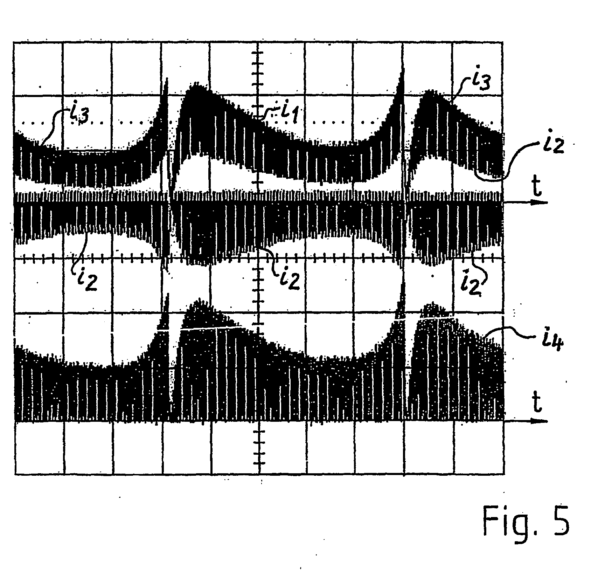

Wenn das Tastverhältnis des PWM-Signals 24 100 % beträgt, also der FET 50 ständig leitet, erhält der Motor 20 einen kontinuierlichen Strom und arbeitet in der üblichen Weise wie ein zweisträngiger, zweipulsiger Motor, dessen Arbeitsweise als bekannt vorausgesetzt wird (Als "zweipulsigen" Motor bezeichnet man einen Motor, dessen Statorwicklung pro Rotordrehung von 360° el. zwei Stromimpulse zugeführt werden, vgl. Fig. 5.)

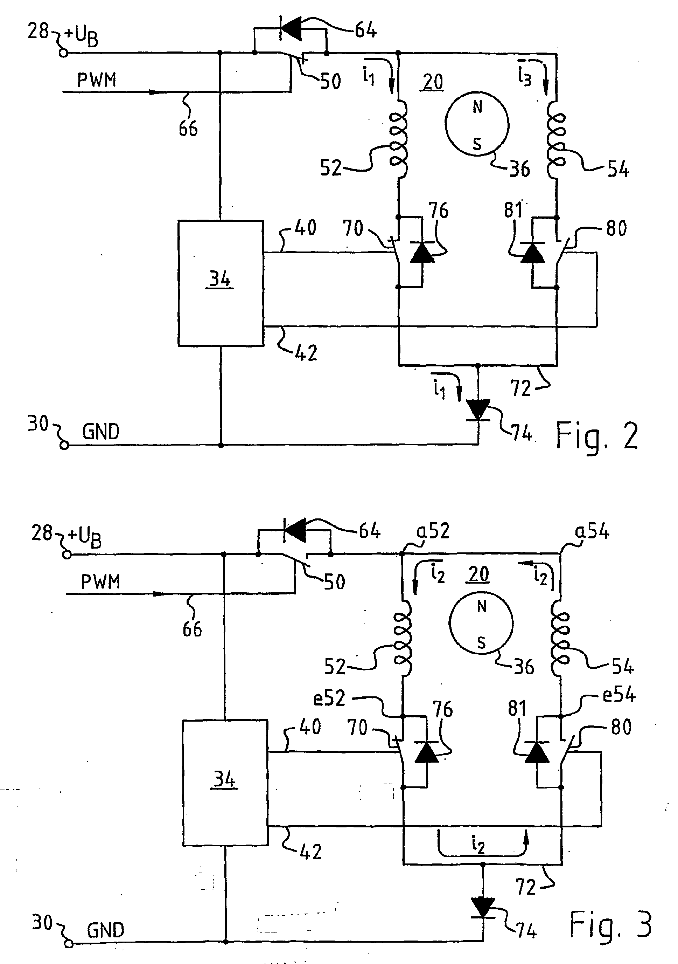

Fig. 2 zeigt diesen Zustand, bei dem der FET 50 ständig leitend ist und der linke FET 70 durch ein positives Signal am Ausgang 40 des Bausteins 34 leitend gesteuert ist, während der Ausgang 42 auf Massepotential liegt, wodurch der rechte FET 80 sperrt. In diesem Fall fließt ein Strom $i_1$ vom Anschluss 28 über den FET 50, den Strang 52, den FET 70 und die Fußpunktdiode 74 zum Anschluss 30.

Dies geschieht, gesteuert durch den Hall-IC 38 (Fig. 1) während eines Drehwinkels des Rotors 36 von etwa 180° el.. Bei einem zweipoligen Rotor 36, wie er in den Fig. 1 bis 4 dargestellt ist, entsprechen 180° el. einem Winkel von 180° mech., d.h. der Zustand gemäß Fig. 2 dauert während etwa einer halben mechanischen Umdrehung an, und während der nächsten halben Umdrehung wird der FET 70 gesperrt und stattdessen der FET 80 leitend gemacht, wodurch ein Strom $i_3$ fließt, vgl. Fig. 1. Man bezeichnet das als elektronische Kommutierung.

Fig. 4 zeigt einen Ausschnitt aus einer bifilaren Wicklung mit den Strängen 52 und 54. Naturgemäß ist Fig. 4 nur ein Beispiel; für zweisträngige, zweipulsige Motoren ist eine große Vielzahl von Bauarten bekannt, und die Darstellung nach Fig. 4 dient nur dazu, die Wirkungsweise an einem einfachen Beispiel zu erläutern, ohne dadurch die Erfindung auf diese spezielle Bauart zu beschränken. Die Erfindung setzt keine bifilare Wicklung voraus, doch ist diese vorteilhaft für den Wirkungsgrad.

Bei dem Schaltzustand gemäß Fig. 2 fließt ein Strom vom Anschluss a52 zum Anschluss e52, also von oben nach unten. Dieser Strom bewirkt an der unteren Seite 100 eines Statorpols 102 z.B. einen Nordpol, so dass der Südpol des Rotors 36 angezogen wird.

Wenn der Strom $i_1$ durch den FET 70 abgeschaltet und statt dessen der FET 80 eingeschaltet wird, fließt der Strom $i_3$ (Fig. 1) durch den Strang 54, und zwar von a54 nach e54, also in Fig. 4 von unten nach oben. Dieser Strom bewirkt also an der unteren Seite 100 des Statorpols 102 einen Südpol, so dass der Nordpol des Rotors 36 angezogen wird.

**Einwirkung des PWM-Signals 24**

Wenn das Signal 24 ein Tastverhältnis von <100% hat, wird der FET 50 z.B. 25 000 Mal in der Sekunde kurzzeitig unterbrochen.

Fig. 3 zeigt, was bei einer solchen Unterbrechung geschieht, wenn im Augenblick der linke FET 70 leitend und der rechte FET 80 gesperrt ist.

Vom Anschluss 28 kann nun dem Motor 20 keine Energie aus der Gleichspannungsquelle 22 mehr zugeführt werden, d.h. der Strom $i_1$ wird unterbrochen.

Bei einer Induktivität kann sich jedoch die magnetische Flussdichte B nicht sprunghaft ändern, so dass, bewirkt durch diese Flussdichte, weiterhin ein Strom $i_2$ durch den Strang 52 fließt. Dabei wird der untere Anschluss e52 des Strangs 52 positiv und der obere Anschuss a52 negativ. Die Folge ist, dass der Strom $i_2$ durch den FET 70 fließt, anschließend weiter über die Verbindung 72 zur Diode 81 und durch diese zum Anschluss e54 des Strangs 54, dann durch diesen zum Anschluss a54 und zurück zum Anschluss a52. Der Strom $i_2$ fließt also im Kreis, und er wird gespeist aus der Energie, die im magnetischen Kreis des Motors 20 gespeichert ist, und diese Energie wird folglich in Antriebsenergie für den Rotor 36 umgesetzt und dadurch "verbraucht".

Fig. 4 zeigt den Weg dieses Stroms an einem Beispiel. Dieser fließt vom Anschluss a52 von oben nach unten durch den Strang 52 zum Anschluss e52, so dass der Strang 52 an der Seite 100 des Statorpols 102 einen Nordpol erzeugt.

Vom Anschluss e52 fließt der Strom $i_2$ über den FET 70 und die Diode 81 zum Anschluss e54, und von dort, ebenfalls von oben nach unten, durch den Strang 54 zum Anschluss a54, so dass der Strang 54 ebenfalls an der Polseite 100 einen Nordpol erzeugt.

Da sich der magnetische Fluß im Pol 102 nicht sprunghaft ändert, sondern nur infolge der Umwandlung in Drehenergie des Rotors 36 kontinuierlich abnimmt, bedeutet das, dass wenn bei Fig. 2 der Strom $i_1$ z.B. 1 A beträgt, jetzt in Fig. 3 und 4 der Strom $i_2$ nur die Hälfte davon betragen wird, nämlich 0,5 A, weil ja durch den Strang 52 0,5 A fließen, ebenso durch den Strang 54 0,5 A, was in Fig. 4 einen Gesamtstrom von

$$2 * i_2 = 2 * 0,5\ A = 1\ A$$

ergibt.

Dies bedeutet, dass in diesem Fall eine Sprungfunktion gegeben ist, d.h. der Strom $i_1$ von 1,0 A in Fig. 2 teilt sich auf in zwei Ströme von 0,5 A, ohne das sich hierdurch an der Wirkung auf den Rotor 36 etwas ändert.

Wird der FET 50 durch das Signal 24 wieder leitend, so erhält man sofort wieder den Zustand nach Fig. 2, d.h. der Strom durch den Strang 54 wird sofort zu Null, und der Strom $i_1$ springt sofort wieder zurück auf einen Wert, der jetzt kleiner ist als 1,0 A, wobei nun wieder Energie aus der Gleichspannungsquelle 22 zugeführt wird.

Wenn also durch das PWM-Signal 24 der FET 50 gesperrt wird, halbiert sich der im Augenblick fließende Strom $i_1$, aber der Strom

$$i_3 = 0,5 * i_1 \qquad\qquad ...(2)$$

fließt durch die doppelte Zahl von Windungen, nämlich beide Stränge 52 und 54, wie in Fig. 4 dargestellt, so dass sich an der magnetischen Wirkung nichts ändert, wie das dem Fachmann ohne weitere Erläuterungen klar ist.

Die sprunghafte Änderung des Stromes bei den Schaltvorgängen des FET 50 wird dadurch ermöglicht, dass sich bei diesen Schaltvorgängen am magnetischen Fluss durch den Rotorpol 102 nichts ändert, d.h. die magnetische Energie bleibt im Augenblick der sprunghaften Änderung unverändert.

Die Fußpunktdiode 74 bewirkt, dass der beim Abschalten des FET 50 induzierte Strom nur über die Verbindung 72 fließen kann. Statt der Diode 74 könnte auch ein aktiver Halbleiterschalter (ohne Freilaufdiode) verwendet werden, der vom Signal 24 gesteuert wird, doch ist diese Lösung aufwändiger.

Zur Verbesserung des Wirkungsgrades ist es mit Vorteil möglich, über eine Verbindung 67, welche vom PWM-Generator 26 zum Kommutierungsbaustein 34 führt, zeitgleich mit dem Sperren des FET 50 beide FETs 70 und 80 leitend zu machen, da der Spannungsabfall an einem leitenden FET kleiner ist als der Spannungsabfall an einer Strom führenden Diode.

Beim Sperren des FET 50 wird das Potenzial an dessen Drain D negativ, d.h. dort entsteht durch die Induktivität des Wicklungsstranges 52 oder 54 eine negative Spannungsspitze, deren Höhe vom Kopplungsfaktor der bifilaren Wicklung (vgl. Fig. 4) sowie der Schaltgeschwindigkeit des FET 50 abhängt.

Zum Begrenzen dieser negativen Spannungsspitze (ohne dabei den FET 50 langsamer schalten zu müssen) gibt es zwei Möglichkeiten:

a) Die Z-Diode 64, welche zwischen Drain und Source des FET 50 angeordnet ist. Durch sie wird die negative Spannungsspitze ab Erreichen einer bestimmten Amplitude gekappt.

Oder:

b) Die Diode 55, deren Katode mit dem Drain D des FET 50 und deren Anode mit dem Anschluss 30 (GND) verbunden ist.

Fig. 1 zeigt beide Varianten. Beide Varianten harmonieren mit dem in Fig. 3 dargestellten Vorgang des Kreisstromes $i_2$ und beeinflussen diesen nicht negativ.

Beide Varianten sind vorteilhaft, weil man bei ihnen die Schaltgeschwindigkeit des FET 50 nicht verlangsamen muss. Würde man das tun, so könnte sich eine Beziehung zwischen dem Tastverhältnis pwm und der Drehzahl des Motors 20 ergeben, die stark von der Linearität abweicht.

Durch die Erfindung ergibt sich der Vorteil, dass durch Verändern des Tastverhältnisses des Signals 24 der Motorstrom $i_4$ (Fig. 1) und damit auch die Drehzahl des Motors 20 über einen großen Bereich nahezu linear, geräuscharm und EMV-konform verändert werden kann, so dass z.B. einem Tastverhältnis von 20 - 100 % auch eine Drehzahländerung von etwa 20 - 100 % der Höchstdrehzahl entspricht. Dies wäre nicht möglich, wenn durch das PWM-Signal 22 die FETs 70 und 80 direkt gesteuert würden. Versuche der Anmelderin haben gezeigt, dass in diesem Fall bei einem Tastverhältnis unter 50 % der Motor 20 einfach stehen bleibt.

Deshalb kann man mit dem PWM-Signal 24 bei der Erfindung direkt den Motor 20 steuern, ohne dieses Signal durch elektronische Manipulationen verändern zu müssen. Naturgemäß sind solche Manipulationen auch im Rahmen der Erfindung nicht ausgeschlossen, z.B. zum Erzeugen einer eingangs beschriebenen Hysterese.

Sehr wichtig ist auch, dass durch die beschriebenen Schaltvorgänge im FET 50 die FETs 70 und 80, welche die elektronische Kommutierung bewirken, nicht stärker belastet werden, da beim Sperren des FET 50 der Strom im augenblicklich leitenden FET 70 oder 80 zeitweilig auf die Hälfte sinkt, wodurch auch die Verlustleistung entsprechend sinkt.

Durch die intelligente Nutzung der im magnetischen Kreis des Motors 20 gespeicherten Energie, welche bei der Erfindung während der Zeiten zum Antrieb des Rotors 26 verwendet wird, während deren der FET 50 keinen Strom leitet, entsteht bei den Schaltvorgängen nur wenig Energie in Form von Blindleistung, so dass für den Kondensator 32 eine kleine Baugröße genügt, z.B. 100 bis 470 nF. Würde man die FETs 70 und 80 direkt mit dem Signal 24 steuern, so bräuchte man einen weitaus größeren Pufferkondensator, für den gerade bei Kompaktlüftern kein Platz vorhanden wäre. Auch würde ein solcher Kondensator wegen seiner beschränkten Lebensdauer implizit die Lebensdauer des Motors 20 verkürzen und könnte nicht als SMD-Bauteil verarbeitet werden

Durch die Z-Diode 64 oder die Diode 55 erreicht man, dass die am FET 50 in Betrieb entstehenden negativen Spannungsspitzen wesentlich gedämpft werden.

Durch das RC-Glied 32, 34 erreicht man im Zusammenwirken mit der Diode 74, dass Spannungserhöhungen am Gleichstrorri-Zwischenkreis (dc link) 51, die bei der normalen Kommutierung des Motors 20 auftreten, reduziert werden.

Da der Motorstrom beim PWM-Betrieb durch beide Stränge 52, 54 fließt, ergibt sich durch die Erfindung eine Art Zwitter zwischen einem zweipulsigen Motor mit zwei Strängen und einem zweipulsigen Motor mit nur einem Strang, so dass sich insgesamt der Wirkungsgrad verbessert, da im FET 50 durch den digitalen Schaltbetrieb keine großen Verluste entstehen. Dies ermöglicht es, für den FET 50 einen Typ mit etwas geringerer Leistung zu verwenden, was die Kosten senkt.

**Fig. 5** zeigt ein Oszillogramm der Ströme im Motor 20. Unten ist der Strom $i_4$ dargestellt, welcher aus der Stromquelle 22 in den Motor 20 fließt. Dieser Strom variiert bei pwm<100 % ständig zwischen dem Wert 0 und einem augenblicklichen Höchstwert, da der FET 50 z.B. 25 000 Mal in der Sekunde aus- und eingeschaltet wird.

Darüber sind die Ströme $i_1$, $i_2$ und $i_3$ dargestellt, deren Bedeutung sich aus den Fig. 1 bis 4 ergibt.

Der Strom $i_1$, (und ebenso der Strom $i_3$) im eingeschalteten Strang springt bei einem pwm < 100 % ständig zwischen 50 und 100 %, wie bei Fig. 4 ausführlich beschrieben.

Der Strom $i_2$ im nicht eingeschalteten Strang springt bei einem pwm < 100 % zwischen 0 und 50 %, bezogen auf den augenblicklichen Wert des Stromes $i_4$.

Nimmt man an, dass der Motor mit 6 000 U/min läuft, so entspricht das 100 U/s. Eine Umdrehung dauert also 0,01 Sekunden.

Wenn das PWM-Signal eine Frequenz von 25 000 Hz hat, so erhält man also pro volle Rotorumdrehung eine Zahl Z von

$$Z = 25\,000 * 0,01 = 250 \qquad \qquad ...(3)$$

Stromunterbrechungen durch den FET 50.

Die Dauer dieser Unterbrechungen ist eine Funktion des Tastverhältnisses pwm, und dieses bestimmt folglich den tatsächlichen Wert der Ströme $i_1$, $i_2$, $i_3$ und $i_4$ und dadurch die Drehzahl des Motors 20.

Die Fußpunktdiode 74 ist besonders wichtig für den Vorgang der Kommutierung: Wenn der FET 50 leitend ist, während die Kommutierung erfolgt, wird z.B. der bisher leitende FET 70 abgeschaltet und der bisher gesperrte FET 80 wird eingeschaltet.

Durch das Abschalten des Stromes $i_1$ entsteht am Punkt e52 ein positives Potenzial, und dieses wird transformatorisch vom Strang 52 auf den Strang 54 übertragen, so dass dort der Punkt e54 negativer wird und sein Potenzial unter das Potenzial des Punktes 30 (GND) sinken kann, so dass ohne die Diode 74 ein Strom vom Punkt 30 zur Verbindung 72 fließen würde.

Dies könnte zur Folge haben, dass die Source des FET so negativ wird, dass der FET 70 wieder zu leiten beginnt und in einen hochohmigen Zustand gelangt.

Durch die Diode 74 wird dies verhindert, denn in einem solchen Fall sperrt sie, so dass kein Strom vom Punkt 30 zur Verbindung 72 fließen kann und der abschaltende FET (hier der FET 70) gesperrt bleibt.

Die Form der Ströme $i_1$ bis $i_4$ ist eine Funktion der Form der Spannung, die vom Rotor 36 bei seiner Drehung in den Strängen 52 und 54 induziert wird. Diese Form ist charakteristisch für elektronisch kommutierte Motoren, deren Rotoren eine etwa trapezförmige Magnetisierung der Rotorpole mit schmalen Pollücken haben. Eine solche bevorzugte Magnetisierung der Rotorpole hat sich im Rahmen der vorliegenden Erfindung als sehr wertvoll erwiesen.

Naturgemäß sind im Rahmen der vorliegenden Erfindung vielfache Abwandlungen und Modifikationen möglich. Z.B. können die Transistoren 70 und 80 auch als bipolare Transistoren realisiert werden, doch werden FETs bevorzugt.

**Patentansprüche**

1. Verfahren zum Betrieb eines zweisträngigen elektronisch kommutierten Gleichstrommotors, welcher aufweist:

   Einen permanentmagnetischen Rotor (36);
   Anschlüsse (28, 30) zur Verbindung des Motors mit einer Stromquelle (22);
   einen Stator (102) mit einer Wicklungsanordnung, welche einen ersten Wicklungsstrang (52) aufweist, dem ein erster steuerbarer Halbleiterschalter (70) zugeordnet ist, um den Strom im ersten Wicklugsstrang (52) zu steuern und welche einen zweiten Wicklungsstrang (54) aufweist, dem ein zweiter steuerbarer Halbleiterschalter (80) zugeordnet ist, um den Strom im zweiten Wicklungsstrang (54) zu steuern;
   wobei der erste Halbleiterschalter (70) und der zweite Halbleiterschalter (80) zusammen eine Teilmenge von Halbleiterschaltern definieren und zur elektronischen Kommutierung dienen;
   einen in einer Zuleitung von einem Anschluss (28) zu den Wicklungssträngen (52, 54) angeordneten Feldeffekttransistor (50);
   eine Vorrichtung (74) zum Verhindern eines Rückstroms, weiche in einer gemeinsamen Zuleitung zu den Halbleiterschaltern der Teilmenge angeordnet ist;
   mit folgenden Schritten:
   Abhängig von einem gewünschten Betriebszustand des Motors (20) wird der Feldeffekttransistor (50) durch ein PWM-Signal alternierend gesperrt und eingeschaltet, ohne hierbei den im Augenblick leitend gesteuerten Halbleiterschalter (70. 80) aus der Teilmenge nichtleitend zu steuern; so dass im Betrieb anschließend an eine Sperrung des Feldeffekttransistor (50) über den im Augenblick leitend gesteuerten Halbleiterschalter aus der Teilmenge, und den anderen Halbleiterschalter aus der Teilmenge, oder eine letzterem zugeordnete Freilaufdiode (76, 81), sowie über den ersten und den zweiten Wicklungsstrang (52, 54), ein abklingender Kreisstrom ($i_2$; $i_3$) fließt; welcher im Motor (20) ein Drehmoment erzeugt.

2. Verfahren nach Anspruch 1, bei welchem ein Wicktungsstrang (52) mit einem Anschluss (D) des ihm zugeordneten steuerbaren Halbleiterschalters (70) verbunden ist, und der andere Anschluss (S) dieses steuerbaren Halbleiterschalters (70) mit dem entsprechenden anderen Anschluss (S) des mit dem anderen Wicklungsstrang (54) verbundenen steuerbaren Halbleiterschalters (80) durch eine elektrische Verbindung (72) verbunden ist, und in der Zuleitung vom Anschluss (30) zu dieser elektrischen Verbindung (72) ein Sperrelement (74) vorgesehen ist, welches nur einen Strom in einer vorgegebenen Richtung ermöglicht.

3. Verfahren nach einem der vorhergehenden Ansprüche, bei welchem die Wicklungsstränge (52, 54) eine magnetische Kopplung (56) aufweisen.

4. Verfahren nach Anspruch 3 für einen Motor, der ein ferromagnetisches Statorelement (102) aufweist, das so ausgebildet ist, dass es die Wicklungsstränge (52, 54) magnetisch koppelt.

5. Verfahren nach einem der vorhergehenden Ansprüche, bei welchem zum Feldeffekttransistor (50) eine Diode (64) antiparallel geschaltet ist.

6. Verfahren nach Anspruch 5, bei welchem die antiparallel geschaltete Diode als Z-Diode (64) ausgebildet ist.

7. Verfahren nach einem der vorhergehenden Ansprüche, bei welchem zwischen Anschlüsse (28, 30) des Motors ein RC-Glied (32, 34) angeordnet ist.

8. Verfahren nach einem der vorhergehenden Ansprüche, bei welchem mit jedem der beiden Wicklungssträngen (52, 54) der diesem zugeordnete Halbleiterschalter (70, 80) in Reihe geschaltet ist, wobei zwischen der Verbindung von Halbleiterschalter (70, 80) und zugeordnetem Wicklungsstrang (52, 54) und der Steuerelektrode (G) des betreffenden Halbleiterschalters (70, 80) ein RC-Glied (82, 84; 94; 96) vorgesehen ist, um die Schaltgeschwindigkeit dieses Halbleiterschalters zu verlangsamen.

9. Verfahren nach einem der vorhergehenden Ansprüche, bei welchem mit jedem der beiden Wicklungssträngen (52, 54) ein diesem zugeordneter Halbleiterschalter (70, 80) in Reihe geschaltet ist,
und zum Reduzieren von Oszillationen an den mit den Wicklungssträngen (52, 54) verbundenen Elektroden (D) dieser Halbleiterschalter (70, 80) zwischen diesen Elektroden (D) mindestens ein RC-Glied (90, 92; 94, 96) vorgesehen ist.

10. Verfahren nach einem der vorhergehenden Ansprüche, bei welchem der Feldeffekttransistor (50) an seinem mit den Wicklungssträngen (52, 54) verbundenen Ausgang (51) mit der einen Elektrode einer Diode (55) verbunden ist, deren andere Elektrode mit dem anderen Anschluss (30) des Motors verbunden ist, um Spannungsspitzen zu begrenzen, welche bei Schaltvorgängen des Feldeffekttransistors (50) an dessen motorseitigem Ausgang auftreten.

11. Zweisträngiger elektronisch kommutierten Gleichstrommotors, welcher aufweist:

Einen permanentmagnetischen Rotor (36);
Anschlüsse (28, 30) zur Verbindung des Motors mit einer Stromquelle (22);
einen Stator (102) mit einer Wicklungsanordnung,

- welche einen ersten Wicklungsstrang (52) aufweist, dem ein erster steuerbarer Halbleiterschalter (70) zugeordnet ist, um den Strom im ersten Wicklungsstrang (52) zu steuern,
und
- welche einen zweiten Wicklungsstrang, (54) aufweist, dem ein zweiter steuerbarer Halbleiterschalter (80) zugeordnet ist, um den Strom im zweiten Wicklungsstrang (54) zu steuern;

wobei erster Halbleiterschalter (70) und zweiter Halbleiterschalter (80) zusammen eine Teilmenge von Halbleiterschaltern definieren und zur elektronischen Kommutierung dienen;
einen in einer Zuleitung von einem der Anschlüsse (28, 30) zu den Wicklungssträngen (52, 54) angeordneten Feldeffekttransistor (50), dessen Steuerelektrode (G) durch ein PWM-Signal (24) steuerbar ist;
eine Vorrichtung (74) zum Verhindern eines Rückstroms, welche in einer gemeinsamen Zuleitung zu den Halbleiterschaltern (70, 80) der Teilmenge angeordnet ist;
und eine Anordnung zum Bewirken folgender Schritte:
Abhängig von einem gewünschten Betriebszustand des Motors (20) wird der Feldeffekttransistor (50) alternierend gesperrt und eingeschaltet, ohne hierbei den im Augenblick leitend gesteuerten Halbleiterschalter aus der Teilmenge nichtleitend zu steuern, so dass im Betrieb, anschließend an eine Sperrung des Feldeffekttransistors (50), über den im Augenblick leitend gesteuerten Halbleiterschalter aus der Teilmenge und den anderen Halbleiterschalter aus der Teilmenge, oder eine letzterem zugeordnete Freilaufdiode (76, 81), sowie über den ersten und den zweiten Wicklungsstrang (52, 54), ein abklingender Kreisstrom ($i_2$, $i_3$) fließt, welcher im Motor ein Drehmoment erzeugt.

12. Motor nach Anspruch 11 bei welchem ein Wicklungsstrang (52) mit einem Anschluss (D) des ihm zugeordneten Halbleiterschalters (70) verbunden ist, und der andere Anschluss (S) dieses Halbleiterschalters (70) mit dem entsprechenden anderen Anschluss (S) des mit dem anderen Wicklungsstrang (54) verbundenen Halbleiterschalters (80) durch eine elektrische Verbindung (72) verbunden ist,
und in der Zuleitung von einem der Anschlüsse (28, 30) zu dieser elektrischen Verbindung (72) ein Sperrelement (74) vorgesehen ist, welches nur einen Strom in einer vorgegebenen Richtung ermöglicht.

13. Motor nach Anspruch 11 oder 12, bei welchem die Wicklungssträngen (52, 54) eine magnetische Kopplung (56) aufweisen.

14. Motor nach Anspruch 13, der ein ferromagnetisches Statorelement (102) aufweist, das so ausgebildet ist, dass es die Wicklungssträngen (52, 54) magnetisch koppelt.

15. Motor nach einem der Ansprüche 11 bis 14, bei welchem zum Feldeffekttransistor (50) eine Diode (64) antiparallel geschaltet ist.

16. Motor nach einem der Ansprüche 11 bis 15, bei welchem zwischen den Anschlüssen (28, 30) des Motors ein RC-Glied (32, 34) angeordnet ist.

17. Motor nach einem der Ansprüche 11 bis 16, bei welchem mit jedem der beiden Wicklungsstränge (52, 54) der diesem zugeordnete Halbleiterschalter (70, 80) in Reihe geschaltet ist,
wobei zwischen der Verbindung von Halbleiterschalter (70, 80) und zugeordnetem Wicklungsstrang (52, 54), und der Steuerelektrode (G) des betreffenden Halbleiterschalters, (70, 80), ein RC-Glied (82, 84; 94, 96) vorgesehen ist, um die Schaltgeschwindigkeit dieses Halbleiterschalters zu verlangsamen.

18. Motor nach einem der Ansprüche 11 bis 17, bei welchem mit jedem der beiden Wicklungsstränge (52, 54) der diesem zugeordnete Halbleiterschalter (70, 80) in Reihe geschaltet ist,
und zum Reduzieren von Oszillationen an den mit den Wicklungssträngen (52, 54) verbundenen Elektroden (D) dieser Halbleiterschalter (70, 80) zwischen diesen Elektroden (D) mindestens ein RC-Glied (90, 92; 94, 96) vorgesehen ist.

19. Motor nach einem der Ansprüche 11 bis 18, bei welchem der Feldeffekttransistor (50) an seinem motorseitigen Ausgang (51) mit der einen Elektrode einer Diode (55) verbunden ist, deren andere Elektrode mit dem anderen Anschluss (30) des Motors (20) verbunden ist, um Spannungsspitzen zu begrenzen, welche bei Schaltvorgängen des dritten Halbleiterschalters (50) an dessen motorseitigem Ausgang (51) auftreten.

20. Motor nach einem der Ansprüche 11 bis 19, bei welchem der permanentmagnetische Rotor (36) eine trapezförmige Magnetisierung seiner Rotorpole aufweist.

21. Motor nach einem der Ansprüche 11 bis 20, welcher zusätzlich zu seinen Anschlüssen (28, 30) zur Verbindung mit einer Stromquelle (22) mindestens einen Anschluss (66) zur Verbindung mit einer Quelle (26) eines PWM-Signals (24) aufweist.

22. Motor nach einem der Ansprüche 11 bis 21, welcher in einem Kompaktlüfter angeordnet ist und zu dessen Antrieb dient.

23. Motor nach einem der Ansprüche 11 bis 22, bei welchem die Halbleiterschalter (70, 80) der Teilmenge als Feldeffekttransistoren ausgebildet sind.

**Claims**

1. Method of operating a two-phase, electronically commutated direct current motor, which has
a permanently magnetic rotor (36);
terminals (28, 30) for connecting the motor to a current source (22);
a stator (102) with a winding arrangement, which has a first winding phase (52), with which a first, controllable semiconductor switch (70) is associated, to control the current in the first winding phase (52), and which has a second winding phase (54), with which a second, controllable semiconductor switch (80) is associated, to control the current in the second winding phase (54);
the first semiconductor switch (70) and second semiconductor switch (80) together defining a subset of semiconductor switches and being used for electronic commutation;
a field effect transistor (50), which is arranged in a supply line from a terminal (28) to the winding phases (52, 54);
a device (74), which is arranged in a common supply line to the semiconductor switches of the subset, for preventing a reverse current;
with the following steps:

depending on a desired operating state of the motor (20), the field effect transistor (50) is alternately blocked and switched on by a PWM signal, without controlling that semiconductor switch (70, 80) of the subset which at this moment is controlled to be conducting to be non-conducting, so that in operation, following a blocking of the field effect transistor (50), via that semiconductor switch of the subset which at this moment is controlled to be conducting, and the other semiconductor switch of the subset, or a free-wheeling diode (76, 81) which is associated with the latter, and via the first and second winding phases (52, 54), a decaying circulating current

($i_2$, $i_3$) flows, and generates a torque in the motor (20).

2. Method according to Claim 1, wherein a winding phase (52) is connected to a terminal (D) of the controllable semiconductor switch (70) which is associated with it, and the other terminal (S) of this controllable semiconductor switch (70) is connected to the corresponding other terminal (S) of the controllable semiconductor switch (80) which is connected to the other winding phase (54) by an electrical connection (72),
and in the supply line from the terminal (30) to this electrical connection (72), a blocking element (74), which makes a current possible only in a predefined direction, is provided.

3. Method according to one of the preceding claims, wherein the winding phases (52, 54) have a magnetic coupling (56).

4. Method according to Claim 3, for a motor which has a ferromagnetic stator element (102), which is in such a form that it couples the winding phases (52, 54) magnetically.

5. Method according to one of the preceding claims, wherein a diode (64) is connected antiparallel to the field effect transistor (50).

6. Method according to Claim 5, wherein the antiparallel connected diode is in the form of a Zener diode (64).

7. Method according to one of the preceding claims, wherein between terminals (28, 30) of the motor, an RC element (32, 34) is arranged.

8. Method according to one of the preceding claims, wherein to each of the two winding phases (52, 54) the semiconductor switch (70, 80) which is associated with it is connected in series, and wherein between the connection of semiconductor switch (70, 80) and associated winding phase (52, 54) and the control electrode (G) of the relevant semiconductor switch (70, 80) an RC element (82, 84; 94, 96) is provided, to slow down the switching speed of this semiconductor switch.

9. Method according to one of the preceding claims, wherein to each of the two winding phases (52, 54) a semiconductor switch (70, 80) which is associated with it is connected in series, and to reduce oscillations at those electrodes (D) of these semiconductor switches (70, 80) which are connected to the winding phases (52, 54), at least one RC element (90, 92; 94, 96) is provided between these electrodes (D).

10. Method according to one of the preceding claims, wherein the field effect transistor (50) is connected at its output (51) which is connected to the winding phases (52, 54) to one electrode of a diode (55), the other electrode of which is connected to the other terminal (30) of the motor, to limit voltage peaks which occur on switching events of the field effect transistor (50) at its motor-side output.

11. Two-phase, electronically commutated direct current motor, having:

a permanently magnetic rotor (36);
terminals (28, 30) for connecting the motor to a current source (22);
a stator (102) with a winding arrangement

- which has a first winding phase (52), with which a first, controllable semiconductor switch (70) is associated, to control the current in the first winding phase (52),
and
- which has a second winding phase (54), with which a second, controllable semiconductor switch (80) is associated, to control the current in the second winding phase (54);

the first semiconductor switch (70) and second semiconductor switch (80) together defining a subset of semiconductor switches and being used for electronic commutation;
a field effect transistor (50), which is arranged in a supply line from one of the terminals (28, 30) to the winding phases (52, 54), and the control electrode (G) of which is controllable by a PWM signal (24);
a device (74), which is arranged in a common supply line to the semiconductor switches (70, 80) of the subset, for preventing a reverse current;
and an arrangement to cause the following steps:

depending on a desired operating state of the motor (20), the field effect transistor (50) is alternately blocked and switched on, without controlling that semiconductor switch (70, 80) of the subset which at this moment is controlled to be conducting to be non-conducting, so that in operation, following a blocking of the field effect transistor (50), via that semiconductor switch of the subset which at this moment is controlled to be conducting, and the other semiconductor switch of the subset, or a free-wheeling diode (76, 81) which is associated with the latter, and via the first and second winding phases (52, 54),

a decaying circulating current ($i_2$, $i_3$) flows, and generates a torque in the motor (20).

12. Motor according to Claim 11, wherein a winding phase (52) is connected to a terminal (D) of the semiconductor switch (70) which is associated with it, and the other terminal (S) of this semiconductor switch (70) is connected to the corresponding other terminal (S) of the semiconductor switch (80) which is connected to the other winding phase (54) by an electrical connection (72),

and in the supply line from one of the terminals (28, 30) to this electrical connection (72), a blocking element (74), which makes a current possible only in a predefined direction, is provided.

13. Motor according to Claim 11 or 12, wherein the winding phases (52, 54) have a magnetic coupling (56).

14. Motor according to Claim 13, which has a ferromagnetic stator element (102), which is in such a form that it couples the winding phases (52, 54) magnetically.

15. Motor according to one of Claims 11 to 14, wherein a diode (64) is connected antiparallel to the field effect transistor (50).

16. Motor according to one of Claims 11 to 15, wherein between the terminals (28, 30) of the motor, an RC element (32, 34) is arranged.

17. Motor according to one of Claims 11 to 16, wherein to each of the two winding phases (52, 54) the semiconductor switch (70, 80) which is associated with it is connected in series,

and wherein between the connection of semiconductor switch (70, 80) and associated winding phase (52, 54) and the control electrode (G) of the relevant semiconductor switch (70, 80) an RC element (82, 84; 94, 96) is provided, to slow down the switching speed of this semiconductor switch.

18. Motor according to one of Claims 11 to 17, wherein to each of the two winding phases (52, 54) a semiconductor switch (70, 80) which is associated with it is connected in series,

and to reduce oscillations at those electrodes (D) of these semiconductor switches (70,80) which are connected to the winding phases (52, 54), at least one RC element (90, 92; 94, 96) is provided between these electrodes (D).

19. Motor according to one of Claims 11 to 18, wherein the field effect transistor (50) is connected at its motor-side output (51) to one electrode of a diode (55), the other electrode of which is connected to the other terminal (30) of the motor (20), to limit voltage peaks which occur on switching events of the third semiconductor switch (50) at its motor-side output (51).

20. Motor according to one of Claims 11 to 19, wherein the permanently magnetic rotor (36) has trapezoidal magnetisation of its rotor poles.

21. Motor according to one of Claims 11 to 20, which in addition to its terminals (28, 30) for connection to a current source (22), has at least one terminal (66) for connection to a source (26) of a PWM signal (24).

22. Motor according to one of Claims 11 to 21, which is arranged in a compact fan and is used to drive it.

23. Motor according to one of Claims 11 to 22, wherein the semiconductor switches (70, 80) of the subset are in the form of field effect transistors.

**Revendications**

1. Procédé pour faire fonctionner un moteur biphasé à courant continu à commutation électronique, lequel présente :

un rotor (36) à aimant permanent ;

des connexions (28, 30) pour relier le moteur à une source de courant (22) ;

un stator (102) avec un agencement d'enroulements, lequel présente un premier enroulement de phase (52) auquel est associé un premier commutateur à semi-conducteur commandable (70) pour commander le courant dans le premier enroulement de phase (52) et lequel présente un deuxième enroulement de phase (54) auquel est associé un deuxième commutateur à semi-conducteur commandable (80) pour commander le courant dans le deuxième enroulement de phase (54) ;

le premier commutateur à semi-conducteur (70) et le deuxième commutateur à semi-conducteur (80) définissant ensemble un sous-ensemble de commutateurs à semi-conducteur et servant à la commutation électronique ;

un transistor à effet de champ (50) disposé dans une ligne menant d'une connexion (28) aux enroulements de phase (52, 54) ;

un dispositif (74) pour empêcher un courant de retour, lequel est disposé dans une ligne commune menant aux commutateurs à semi-conducteur du sous-ensemble ;

présentant les étapes suivantes :

en fonction d'un état de fonctionnement souhaité du moteur (20), le transistor à effet de champ (50) est alternativement bloqué et activé par un signal PWM sans toutefois rendre non conducteur le commutateur à semi-conducteur (70, 80) momentanément conducteur du sous-ensemble, de manière qu'en fonctionnement, à la suite d'un blocage du transistor à effet de champ (50), il circule via le commutateur à semi-conducteur momentanément conducteur du sous-ensemble et l'autre commutateur à semi-conducteur du sous-ensemble, ou une diode de roue libre (76, 81) associée à ce dernier, ainsi que via le premier et le deuxième enroulement de phase (52, 54) un courant circulaire ($i_2$ ; $i_3$) décroissant qui génère un couple de rotation dans le moteur.

2.  Procédé selon la revendication 1, dans lequel un enroulement de phase (52) est relié à une connexion (D) du commutateur à semi-conducteur commandable (70) qui lui est associé et l'autre connexion (S) de ce commutateur à semi-conducteur commandable (70) est reliée par une liaison électrique (72) à l'autre connexion (S) correspondante du commutateur à semi-conducteur commandable (80) relié à l'autre enroulement de phase (54),

    et dans la ligne menant de la connexion (30) à cette liaison électrique (72) il est prévu un élément de blocage (74) qui ne permet la circulation d'un courant que dans un sens prédéfini.

3.  Procédé selon l'une des revendications précédentes, dans lequel les enroulements de phase (52, 54) présentent un couplage magnétique (56).

4.  Procédé selon la revendication 3 pour un moteur qui présente un élément de stator (102) ferromagnétique qui est conçu de manière à coupler magnétiquement les enroulements de phase (52, 54).

5.  Procédé selon l'une des revendications précédentes, dans lequel une diode (64) est branchée antiparallèlement au transistor à effet de champ (50).

6.  Procédé selon la revendication 5, dans lequel la diode branchée antiparallèlement est réalisée sous forme de diode Z (64).

7.  Procédé selon l'une des revendications précédentes, dans lequel un circuit RC (32, 34) est disposé entre les connexions (28, 30) du moteur.

8.  Procédé selon l'une des revendications précédentes, dans lequel le commutateur à semi-conducteur (70, 80) associé à chacun des deux enroulements de phase (52, 54) est branché en série avec celui-ci, un circuit RC (82, 84 ; 94, 96) étant prévu entre la liaison du commutateur à semi-conducteur (70, 80) et de l'enroulement de phase (52, 54) associé et l'électrode de commande (G) du commutateur à semi-conducteur (70, 80) concerné pour ralentir la vitesse de commutation de ce commutateur à semi-conducteur.

9.  Procédé selon l'une des revendications précédentes, dans lequel un commutateur à semi-conducteur (70, 80) associé à chacun des deux enroulements de phase (52, 54) est branché en série avec celui-ci,

    et pour réduire les oscillations aux électrodes (D) de ces commutateurs à semi-conducteur (70, 80) reliées aux enroulements de phase (52, 54), au moins un circuit RC (90, 92 ; 94, 96) est prévu entre ces électrodes (D).

10. Procédé selon l'une des revendications précédentes, dans lequel le transistor à effet de champ (50) est relié par sa sortie (51) reliée aux enroulements de phase (52, 54) à une électrode d'une diode (55) dont l'autre électrode est reliée à l'autre connexion (30) du moteur pour limiter les pointes de tension qui se produisent lors des commutations du transistor à effet de champ (50) à sa sortie côté moteur.

**11.** Moteur biphasé à courant continu à commutation électronique, lequel présente :

un rotor (36) à aimant permanent ;
des connexions (28, 30) pour relier le moteur à une source de courant (22) ;
un stator (102) avec un agencement d'enroulements,

- lequel présente un premier enroulement de phase (52) auquel est associé un premier commutateur à semi-conducteur commandable (70) pour commander le courant dans le premier enroulement de phase (52) et
- lequel présente un deuxième enroulement de phase (54) auquel est associé un deuxième commutateur à semi-conducteur commandable (80) pour commander le courant dans le deuxième enroulement de phase (54) ;

le premier commutateur à semi-conducteur (70) et le deuxième commutateur à semi-conducteur (80) définissant ensemble un sous-ensemble de commutateurs à semi-conducteur et servant à la commutation électronique ;
un transistor à effet de champ (50) disposé dans une ligne menant des connexions (28, 30) aux enroulements de phase (52, 54), dont l'électrode de commande (G) est commandable par un signal PWM (24) ;
un dispositif (74) pour empêcher un courant de retour, lequel est disposé dans une ligne commune menant aux commutateurs à semi-conducteur (70, 80) du sous-ensemble ;
et un agencement pour réaliser les étapes suivantes :

en fonction d'un état de fonctionnement souhaité du moteur (20), le transistor à effet de champ (50) est alternativement bloqué et activé sans toutefois rendre non conducteur le commutateur à semi-conducteur momentanément conducteur du sous-ensemble, de manière qu'en fonctionnement, à la suite d'un blocage du transistor à effet de champ (50), il circule via le commutateur à semi-conducteur momentanément conducteur du sous-ensemble et l'autre commutateur à semi-conducteur du sous-ensemble, ou une diode de roue libre (76, 81) associée à ce dernier, ainsi que via le premier et le deuxième enroulement de phase (52, 54) un courant circulaire ($i_2$ ; $i_3$) décroissant qui génère un couple de rotation dans le moteur.

**12.** Moteur selon la revendication 11, dans lequel un enroulement de phase (52) est relié à une connexion (D) du commutateur à semi-conducteur (70) qui lui est associé et l'autre connexion (S) de ce commutateur à semi-conducteur (70) est reliée par une liaison électrique (72) à l'autre connexion (S) correspondante du commutateur à semi-conducteur (80) relié à l'autre enroulement de phase (54),
et dans la ligne menant de l'une des connexions (28, 30) à cette liaison électrique (72) il est prévu un élément de blocage (74) qui ne permet la circulation d'un courant que dans un sens prédéfini.

**13.** Moteur selon la revendication 11 ou 12, dans lequel les enroulements de phase (52, 54) présentent un couplage magnétique (56).

**14.** Moteur selon la revendication 13 qui présente un élément de stator (102) ferromagnétique qui est conçu de manière à coupler magnétiquement les enroulements de phase (52, 54).

**15.** Moteur selon l'une des revendications 11 à 14, dans lequel une diode (64) est branchée antiparallèlement au transistor à effet de champ (50).

**16.** Moteur selon l'une des revendications 11 à 15, dans lequel un circuit RC (32, 34) est disposé entre les connexions (28, 30) du moteur.

**17.** Moteur selon l'une des revendications 11 à 16, dans lequel le commutateur à semi-conducteur (70, 80) associé à chacun des deux enroulements de phase (52, 54) est branché en série avec celui-ci,
un circuit RC (82, 84 ; 94, 96) étant prévu entre la liaison du commutateur à semi-conducteur (70, 80) et de l'enroulement de phase (52, 54) associé et l'électrode de commande (G) du commutateur à semi-conducteur (70, 80) concerné pour ralentir la vitesse de commutation de ce commutateur à semi-conducteur.

**18.** Moteur selon l'une des revendications 11 à 17, dans lequel le commutateur à semi-conducteur (70, 80) associé à chacun des deux enroulements de phase (52, 54) est branché en série avec celui-ci, et pour réduire les oscillations aux électrodes (D) de ces commutateurs à semi-conducteur (70, 80) reliées aux enroulements de phase (52, 54), au moins un circuit RC (90, 92 ; 94, 96) est prévu entre ces électrodes (D).

**19.** Moteur selon l'une des revendications 11 à 18, dans lequel le transistor à effet de champ (50) est relié par sa sortie côté moteur (51) à une électrode d'une diode (55) dont l'autre électrode est reliée à l'autre connexion (30) du moteur (20) pour limiter les pointes de tension qui se produisent lors des commutations du troisième commutateur à semi-conducteur (50) à sa sortie côté moteur (51).

**20.** Moteur selon l'une des revendications 11 à 19, dans lequel le rotor (36) à aimant permanent présente une magnétisation trapézoïdale de ses pôles de rotor.

**21.** Moteur selon l'une des revendications 11 à 20, lequel présente, en plus de ses connexions (28, 30) pour la liaison avec une source de courant (22), au moins une connexion (66) pour la liaison avec une source (26) d'un signal PWM (24).

**22.** Moteur selon l'une des revendications 11 à 21, lequel est disposé dans un ventilateur compact et sert à son entraînement.

**23.** Moteur selon l'une des revendications 11 à 22, dans lequel les commutateurs à semi-conducteur (70, 80) du sous-ensemble sont réalisés sous forme de transistors à effet de champ.

Fig. 1

EP 1 851 847 B1

15

Fig. 2

Fig. 3

Fig. 4

Fig. 5

IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6188187 B